# EUROPEAN PATENT SPECIFICATION

(11) **EP 1 946 969 B1**
(45) Date of publication and mention of the grant of the patent: **20.07.2011**
(21) Application number: 07001150.7
(22) Date of filing: 19.01.2007
(51) Int. Cl.: B60R 5/04

(54) **Baggage space cover**
Gepäckraumabdeckung
Cache-bagages

(43) Date of publication of application: 23.07.2008
(73) Proprietor: Volvo Personvagnar AB, 405 31 Göteborg (SE)
(72) Inventor: Bernhardsson, Nils, 423 43 Torslanda (SE); Laine, Kenneth, 425 65 Hisings Kärra (SE)
(74) Representative: Bergquist, Kjell Gunnar

(56) References cited:
- DE-A1- 3 922 450
- DE-A1- 4 405 281
- JP-A- 10 329 610
- US-A1- 2004 119 307

## Description

### TECHNICAL FIELD

The present invention relates to a baggage space cover system . The baggage space cover is used for covering items stored in the baggage space compartment of a vehicle.

### BACKGROUND ART

Baggage space covers are used in vehicles, such as station wagons, for separating the baggage space compartment of a vehicle from the passenger compartment and to prevent from possibilities to view from the outside of the vehicle what is stored in the baggage space compartment.

In a common type of baggage space cover the complete cover is stored in a cassette and can be pulled out from the cassette when in use and fastened to the side walls using any conventional means like hooks or snap-in solutions. Other types also exist not using a cassette for storing the cover when not in use but instead folding the cover.

In a cassette type the cover is attached to a shaft and wound onto this shaft when stored in the cassette. The winding shaft often has some mechanical means, like a telescopic arrangement, for axial movement to allow the shaft to be compressed in axial direction, i.e. the length of the shaft can be varied. Each end of the cassette has end pieces comprising means for detachably mounting the baggage space cover to the opposing side walls of the baggage space compartment of the vehicle and for holding the shaft ends. The cassette for the baggage space cover is mounted to the opposing side surfaces of the baggage space compartment by pressing the end pieces into recesses integrated in the opposing side surfaces. When the end pieces are pressed into the recesses, the shaft will first be compressed and then expanded when the end piece reaches its rest position. When performing this operation of attaching the baggage space cover the operator has to stand behind the vehicle and bend into the baggage space compartment while at the same time applying a certain pressure to press the end piece into the recesses. This is experienced as uncomfortable and is an unsuitable working position.

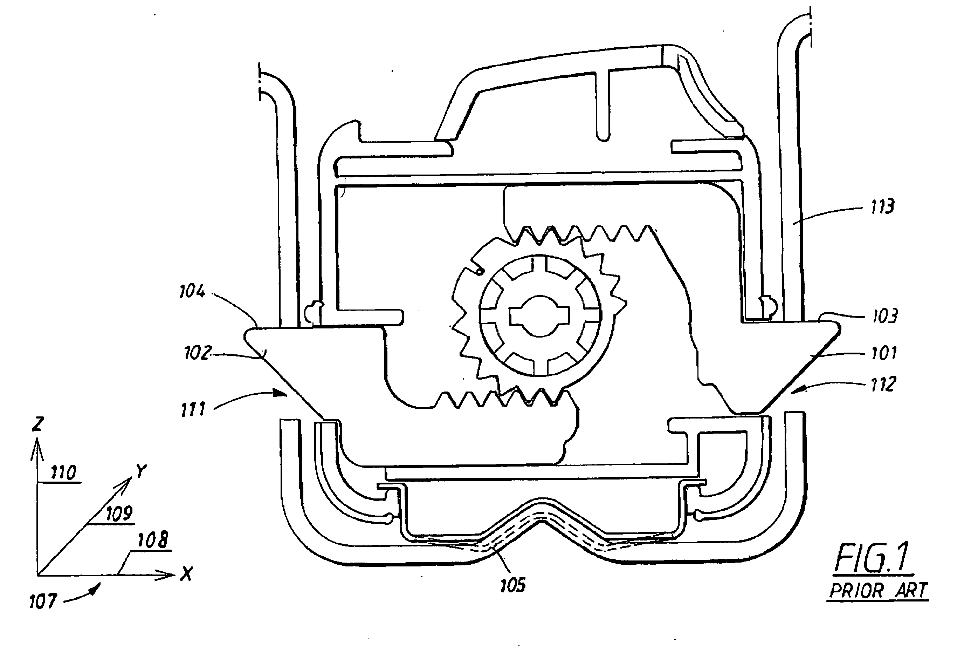

Figure 1 shows a prior art solution for end pieces with the locking sliders 101 and 102 having a flat upper surface 103 and 104 and a leaf spring 105. The coordinate symbol 107 is defining an X-direction 108 corresponding to the length direction of the vehicle and a Y-direction 109 corresponding to the lateral vehicle direction and a Z-direction 110 corresponding to the height direction of the vehicle. This definition of directions is used throughout the rest of the document. Figure 1 shows the locking sliders in an extended position extending through holes 111 and 112 in a recess arranged at the side surface 113 of the baggage space compartment, and thus locking the end pieces and the baggage space cover to the side surface. The leaf spring 105 is pressing the end piece upwards, in positive Z-direction, thus fixing the cassette in Z-direction. A drawback with this solution is that there are no special positioning means for the X and Y directions but the positioning in these directions are determined by the manufacturing tolerances of the vehicle and components. Another drawback is that the relatively stiff, metallic leaf spring might cause wearing of the surfaces in contact with the spring. Also for this prior art solution, the operation to attach the cassette results in an uncomfortable and unsuitable working position as a substantial pressure has to be applied to overcome the pressure of the leaf spring.

A baggage space cover system according to the preamble of claim 1 is known from DE 39 22 450 A1 and DE 44 05 281 A1, respectively.

The technical solutions described above are relatively complicated, requires moving parts which makes it expensive to manufacture and/or gives an inadequate positioning of the baggage space cover. Poor positioning of the baggage space cover results in a disturbing, rattling noise when the vehicle is in motion.

There is thus a need for an improved solution allowing easier and more comfortable mounting of the baggage space cover unit, simpler mechanical design with better positioning resulting in elimination of or at least substantial reduction of disturbing noises.

### DISCLOSURE OF INVENTION

It is therefore the object of the invention to provide a baggage space cover system which can solve the problems of uncomfortable mounting of the baggage space cover unit to the side surfaces of the baggage space compartment of the vehicle, complicated mechanical design and rattling noise when the vehicle is in motion.

This object is achieved by providing a baggage space cover system as defined in claim 1 and a corresponding end piece for use in such a system (claim 13).

The advantage with firmly positioning the end piece in length and/or lateral direction and the height direction of the vehicle is that the rattling noise is decreased. The curved profile of the upper surface of the locking sliders creates a downward pressure when the sliders are extended into the holes in the recesses arranged at the opposing side surfaces of the baggage space compartment. This downward pressure presses the protruding ridge or ridges into the corresponding groove or grooves and thus increases the stabilization of the end piece in length and/or lateral direction of the vehicle while at the same time stabilizing and positioning the end piece in the height direction of the vehicle.

A further advantage is that the end piece design makes it easier to install the baggage space cover device in the vehicle. The end pieces are easily pushed into the recesses arranged at opposing side surfaces of the baggage space compartment as there is no spring force to overcome to get the end pieces into a locked position.

An additional advantage with the curved profile of the locking sliders is that a self stabilizing positioning is obtained. Vibrations of the baggage space cover makes the locking sliders to be further extended into the holes in the recesses arranged at opposing side surfaces of the baggage space compartment and thus increasing the downward pressure and improving the stabilisation of the positioning.

Further advantages are achieved if the invention also is given one or several of the characteristics such as:
- additional lateral lock slider
- guiding means comprising protruding ridges and grooves of different shapes
- orthogonal ridges to achieve positioning in two directions
- separate end piece block comprising the guiding means
- suitable material and surfaces for lower surface of the end piece and the bottom surface of the recess to achieve a high friction between these parts and thus achieving a positioning also in the lateral direction of the vehicle.
- attachment of a spring to the mechanical means to force the at least one lock slider into extended locking position.

### BRIEF DESCRIPTION OF DRAWINGS

Figure 1 schematically shows a cross section of a prior art solution.
Figure 2 is a perspective view showing schematically a complete baggage space cover system according to the invention.
Figure 3 is a perspective view showing schematically an embodiment with the end piece of the invention mounted into a side trim.
Figure 4 is an exploded view schematically showing an embodiment of the end piece with ingoing parts.
Figure 5 schematically shows a cross section of an embodiment of the end piece mounted into the side trim.
Figure 6a-j schematically shows different configurations of ridges and grooves.
Figure 7 schematically shows two orthogonal ridges for positioning the end piece in two directions.

### EMBODIMENT(S) OF THE INVENTION

The invention will in the following be described in detail with reference to the drawings.

Figures 1 has already been described in relation to Background art above.

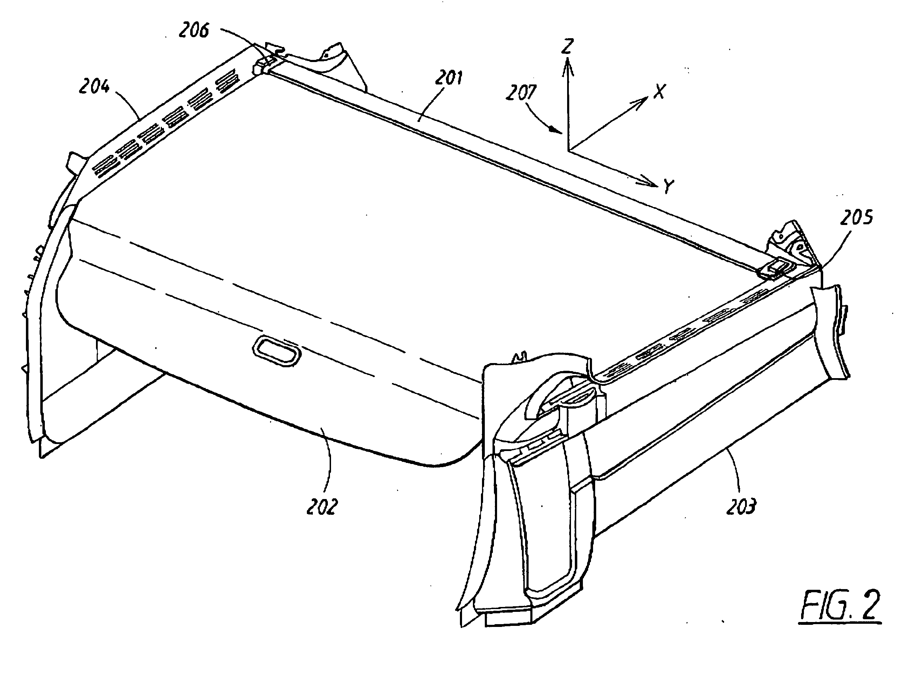

A complete baggage space cover as mounted in a vehicle is shown in figure 2. A baggage space cover 202 is wound onto a winding shaft (not shown in the figure) with a fixed length which rests inside a cassette 201 when not in use. The baggage space cover 202 can be pulled out and fastened to the opposing side surfaces of the baggage space compartment using any conventional means like hooks or snap-in solution. In figure 2 the opposing side surfaces comprises side trims 203 and 204 to facilitate the mounting of the baggage space cover. The side trims are detachably mounted to opposing side walls of the baggage space compartment. In other embodiments the opposing side surfaces can comprise solutions other than side trims or the opposing side surfaces can be the side walls of the baggage space compartment. The cassette has end pieces 205 and 206 at each end. The coordinate symbol 207 defines the directions as explained above in association with figure 1.

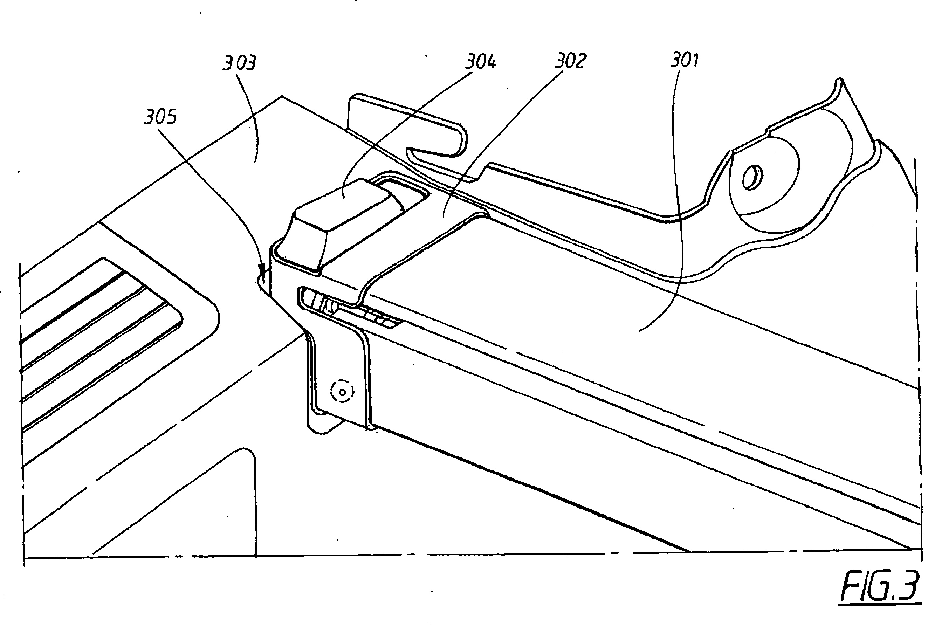

Figure 3 shows the cassette 301 with the end piece 302. Each opposing side surface of the baggage space compartment has a recess for holding the end piece. In the embodiment of figure 3 a recess 305 for holding the end piece 302 is accomplished in the side trim 303. On top of the end piece is a release button 304 explained below.

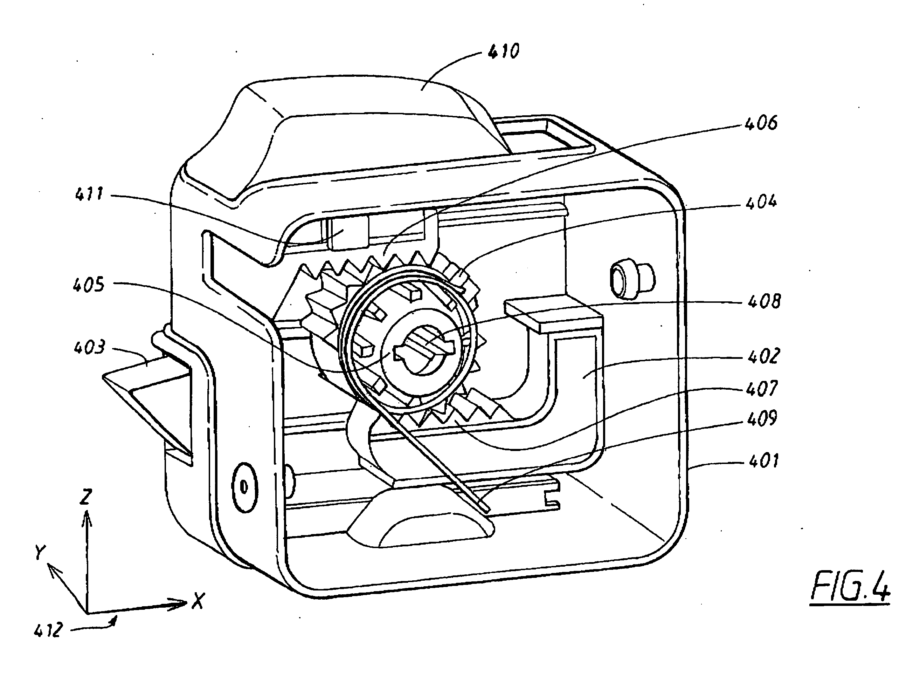

Figure 4 is an exploded view of an embodiment of the end piece 401 with a front lock slider 402 and a rear lock slider 403. A cog wheel 404 is mounted on a tongued flange 405 located between cogged planar areas 406 and 407 of the lock sliders. The cogs in the areas 406 and 407 fits into the cog wheel 404. A hole 408 in the tongued flange 405 is designed to receive one end of the winding shaft. A spring 409 is arranged around the tongued flange 405 and drives the lock sliders to its extended lock positions. The release button 410 is connected to the rear lock slider 403 through a tab 411. When the release button is pushed in front direction or positive X-direction according to coordinate symbol 412 the rear lock slider 403 follows by means of the connection with the tab 411, turns the cog wheel 404 which activates the spring 409 and drives the front lock slider 402 to a position inside the end piece as long as the release button is pushed forward thus releasing the end piece.

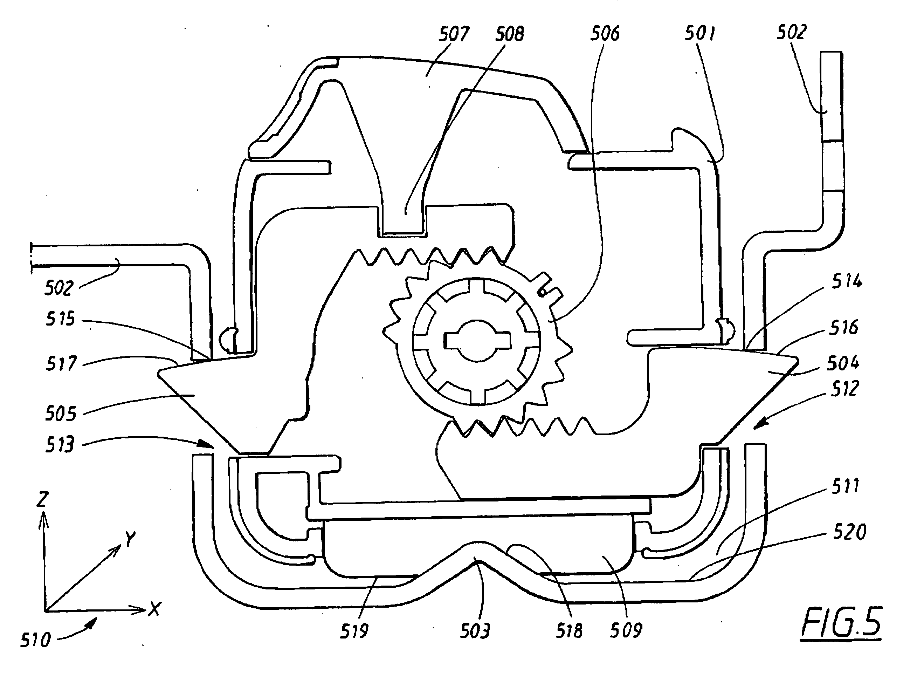

Figure 5 is a cross section of an embodiment of the invention, having side trims as opposing side surfaces in the baggage space compartment, showing the end piece 501 and the side trim 502 with a protruding V-shaped ridge 503 on the bottom of the recess in the side trim. The end piece comprises the front lock slider 504, the rear lock slider 505, the cog wheel 506, the release button 507 with the tab 508 as explained above. A lower surface 519 of the end piece has a V-block 509 integrated with the end piece or as a separate component mounted flush to the bottom of the end piece with any conventional means like gluing, welding or snapping. A V-shaped groove 518 of the V-block mates with the corresponding V-shaped ridge 503 on a bottom surface 520 in the recess 511 of the side trim, thus positioning the end piece and baggage space cover in the X-direction, corresponding to the length direction of the vehicle, see coordinate symbol 510. When the end piece is pushed down in the recess 511 of the side trim, the rear and front lock sliders are snapped into holes 512 and 513 of the side trim. The V-shaped ridge 503 and the V-shaped groove 518 are thus used as guiding means for the positioning. The spring 409 is not shown in this figure for clarity reasons.

As the spring 409 pushes the sliders apart from one another they will be pushed into the holes 512 and 513 in the side trims and hit the side trim at contact points 514 and 515. Due to the sloped shape of surfaces 516 and 517 of the lock sliders they will push the end piece down, in negative Z-direction, pressing the V-block into the V-shaped ridge of the side trim, thus completely locking the end piece to the side trim also in Z-direction, corresponding to the height direction of the vehicle.

In an embodiment of the invention each end piece comprises a combination of a lateral, a front and a rear lock slider.

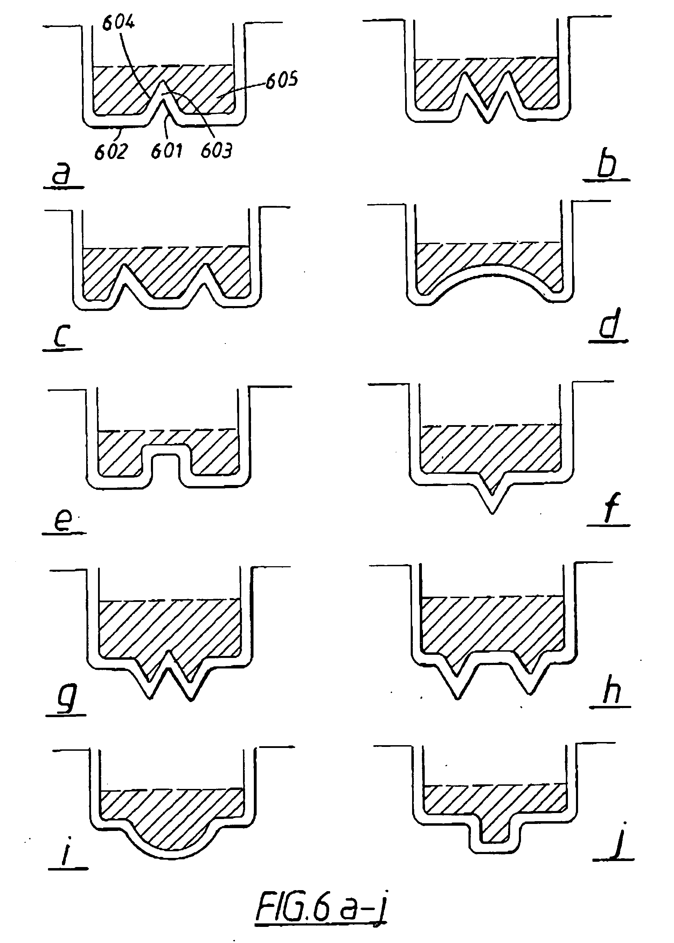

Figure 6 shows different arrangements to achieve the positioning by using a ridge and a mating groove as guiding means for positioning. Figure 6a shows the arrangement according to the embodiment described in figure 5 above with a ridge 601 on the side trim, or other arrangements for the opposing side surfaces to the baggage space compartment, recess bottom surface 602 and the groove 603 in the end piece lower surface 604. The shaded bottom part of the end piece can be designed as a separate block 605 which is mounted flush to the bottom of the end piece with any conventional means like gluing, welding or snapping. Figures 6b-e illustrates other possible shapes of the groove on the lower surface of the end piece. Figures 6f-j illustrates other embodiments of the invention where ridges of different shapes are integrated in the lower surface of the end piece and the mating groove is made in the bottom surface of the recess in the side trim or other arrangements for the opposing side surfaces to the baggage space compartment.

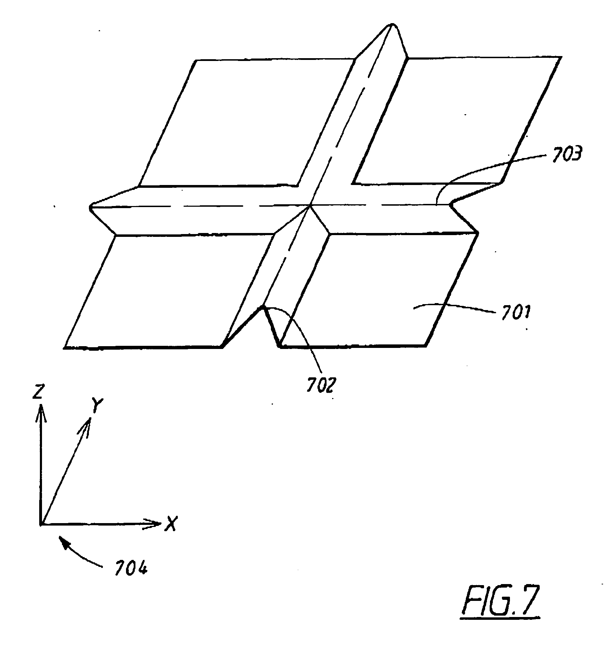

Figure 7 illustrates an embodiment with two orthogonal ridges 702 and 703 as guiding means on a surface 701 which can be either the lower surface of the end piece or the bottom surface of the recess to the side trim.

The ridge 702 in Y-direction, see coordinate symbol 704, locks the end piece in X-direction, which corresponds to the length direction of the vehicle, while the ridge 703 in X-direction locks the end piece in Y-direction, corresponding to the lateral direction of the vehicle.

Due to manufacturing tolerances there will be a possibility for movement a few millimetres in the Y-direction. This can be avoided by implementing the ridge 703 as described above and/or by a suitable choice of material and surface texture for the lower surface 519, 604 of the end piece and the bottom surface 520, 602 of the recess. In an embodiment the lower surface 519, 604 of the end piece is made e.g. of plastic or synthetic rubber with a suitable shore value having a rubber like texture and creating a high friction towards the bottom surface 520, 602 of the recess 305, 511 made of e.g, suitable plastics like ABS, PP or PC/ABS and in one embodiment having an engraved bar pattern. The high friction between these surfaces in combination with the weight of the baggage space cover device including the cassette with end pieces, winding shaft and cover, makes a movement in Y-direction unlikely unless there are severe side forces due to sudden movements of the vehicle.

## Claims

1. A baggage space cover system comprising a pair of end pieces (205, 206, 302, 401,501 ), mounted to each end of a cassette (201, 301) containing a baggage space cover (202), and corresponding recesses (305, 511) arranged at opposing side surfaces of the baggage space compartment of a vehicle, wherein each end piece is configured for mounting in a corresponding recess, each end piece comprising:
• at least one lock slider (402, 403, 504, 505) configured to lock the end piece to opposing side surfaces of the baggage space compartment of the vehicles;
• mechanical means (404, 506) connected to the at least one lock slider and configured to hold the at least one lock slider in locked position;
• arrangement (304, 410, 507) for the release of the at least one lock slider from locked position;
• wherein a lower surface (519, 604) of the end piece (205, 206, 302, 401, 501) and a bottom surface (520, 602) of the recess (305, 511) are provided with cooperating guiding means for the positioning of the end piece, wherein a first guiding means comprises at least one protruding ridge (503, 601,702, 703) and a second guiding means comprises at least one groove (518, 603) for mating with said ridge, which guiding means extend substantially in at least one of the length and lateral directions of the vehicle, thus positioning the end piece in respectively lateral and length direction;
**characterized in that**
• each end piece comprises one front (402, 504) and one rear (403, 505) lock slider and
• **in that** when the end piece (205,206, 302, 401, 501) is pushed down in the recess (511), the rear (403, 505) and the front (402 504) lock sliders are adapted to be snapped into holes (512, 513) of said opposing side surfaces, and that upper surfaces (516, 517) of the lock sliders have a sloped profile to position the end piece in the height direction of the vehicle by pressing the first guiding means comprising the at least one protruding ridge (503, 601, 702, 703) towards the second guiding means comprising the at least one mating groove (518, 603) so that the downward pressure presses the protruding ridge (503, 601, 702, 703) into the corresponding groove or grooves and thus increases the stabilization of the end piece in length (X) and/or lateral (Y) direction of the vehicle while at the same time stabilizing and positioning the end piece in the height direction (Z) of the vehicle.

2. A baggage space cover system according to claim 1, **characterized in that** each end piece comprises one additional lateral lock slider.

3. A baggage space cover system according to any one of claim 1-2, **characterized in that** the first guiding means comprising the at least one protruding ridge (503, 601, 702, 703) being part of the bottom surface (520, 602) of the recess (305, 511) arranged at opposing side surfaces of the baggage space compartment and the second guiding means comprising the at least one mating groove (518, 603) being part of the lower surface (519, 604) of the end piece.

4. A baggage space cover system according to any one of claim 1-3, **characterized in that** the first guiding means comprising the at least one protruding ridge (503, 601, 702, 703) being part of lower surface (519, 604) of the end piece and the second guiding means comprising the at least one mating groove (518, 603) being part of the bottom surface (520, 602) of the recess (305, 511) arranged at opposing side surfaces of the baggage space compartment.

5. A baggage space cover system according to any one of claim 1-4, **characterized in that** the shape of the ridge or ridges (503, 601, 702, 703) and corresponding groove or grooves (518, 603) are V-shaped.

6. A baggage space cover system according to any one of claim 1-5, **characterized in that** the shape of the ridge or ridges (503, 601, 702, 703) and corresponding groove or grooves (518, 603) are W-shaped.

7. A baggage space cover system according to any one of claim 1-6, **characterized in that** the lower surface of the end piece (519, 604) or the bottom surface (520, 602) of the recess (305, 511) arranged at opposing side surfaces of the baggage space compartment comprises two orthogonal ridges (702, 703).

8. A baggage space cover system according to any one of claim 1-7, **characterized in that** a bottom part (605) of the end piece comprising the guiding means as ridge, ridges, groove or grooves is a separate component mounted flush to the bottom of the end piece.

9. A baggage space cover system according to claim 8, **characterized in that** assembly of the bottom part of the end piece to the end piece is accomplished through snap-on means.

10. A baggage space cover system according to any one of preceding claims, **characterized in that** the lower surface of the end piece (519, 604) is made of synthetic rubber and the bottom surface (520, 602) of the recess (305, 511) arranged at opposing side surfaces of the baggage space compartment is made of ABS plastics and having a surface with an engraved bar pattern.

11. A baggage space cover system according to any one of preceding claims, **characterized in that** the recess (305, 511) is made in a side trim (203, 204, 303).

12. A baggage space cover system according to any one of preceding claims, **characterized in that** the at least one lock slider (403, 404, 504, 505) is forced into extended locking position by a spring (409) attached to the mechanical means (404, 506).

13. An end piece for use in a baggage space cover system according to claim 1.

## Patentansprüche

1. Ein Gepäckraumabdeckungssystem, umfassend ein Paar Endstücke (205, 206, 302, 401, 501), an jedem Ende einer Kassette (201, 301) montiert, aufweisend eine Gepäckraumabdeckung (202) und korrespondierende Aussparungen (305, 511), angeordnet an gegenüberliegenden Seitenflächen eines Gepäckraumfachs eines Fahrzeugs, wobei jedes Endstück zum Einsetzen in eine korrespondierende Aussparung gestaltet ist, jedes Endstück aufweisend:
• mindestens einen Verriegelungsschlitten (402, 403, 504, 505), gestaltet, um die Endstücke mit den gegenüberliegenden Seitenflächen des Gepäckraumfachs des Fahrzeugs zu verriegeln;
• mechanische Mittel (404, 506), verbunden mit dem mindestens einen Verriegelungsschlitten und gestaltet, um den mindestens einen Verriegelungsschlitten in der verriegelten Position zu halten;
• Anordnung (304, 410, 507) zum Lösen des mindestens einen Verriegelungsschlittens aus der verriegelten Position;
• wobei eine untere Fläche (519, 604) des Endstücks (205, 206, 302, 401, 501) und eine Bodenfläche (520, 602) der Aussparung (305, 511) mit zusammenwirkenden Führungsmitteln zum Positionieren der Endstücke bereitgestellt sind, wobei ein erstes Führungsmittel mindestens einen hervorstehenden Rücken (503, 601, 702, 703) aufweist und ein zweites Führungsmittel mindestens eine Nut (518, 603) passend zum Rücken aufweist, wobei die Führungsmittel sich im Wesentlichen in der Längs- und/oder Querrichtung des Fahrzeugs erstrecken, **dadurch** das Endstück jeweils in der Quer- und/oder Längsrichtung positionierend;
**dadurch gekennzeichnet, dass**
• jedes Endstück einen vorderen (402, 504) und einen hinteren (403, 505) Verriegelungsschlitten aufweist und
• **dadurch** dass, wenn das Endstück (205, 206, 302, 401, 501) in die Aussparung (511) hinuntergedrückt wird, der hintere (403, 505) und der vordere (402, 504) Verriegelungsschlitten ausgelegt sind, um in Löcher (512, 513) der gegenüberliegenden Seitenflächen zu schnappen und dass obere Flächen (516, 517) der Verrieglungsschlitten ein schräges Profil aufweisen, um das Endstück in der Höhenrichtung des Fahrzeugs zu positionieren und zwar durch Drücken der ersten Führungsmittel, aufweisend den mindestens einen hervorstehenden Rücken (503, 601, 702, 703), in Richtung der zweiten Führungsmittel, aufweisend die mindestens eine passende Nut (518, 603), so dass der nach unten gerichtete Druck den vorstehenden Rücken (503, 601, 702, 703) in die entsprechende Nut oder Nuten drückt und **dadurch** die Stabilisierung der Endstücke in Längsrichtung (X) und/oder Querrichtung (Y) des Fahrzeugs erhöht, während zur gleichen Zeit das Endstück in der Höhenrichtung (Z) des Fahrzeugs stabilisiert und positioniert wird.

2. Gepäckraumabdeckungssystem gemäß Anspruch 1, **dadurch gekennzeichnet, dass** jedes Endstück einen weiteren Verriegelungsschlitten umfasst.

3. Gepäckraumabdeckungssystem gemäß einem der Ansprüche 1-2, **dadurch gekennzeichnet, dass** die ersten Führungsmittel den mindestens einen hervorstehenden Rücken (503, 601, 702, 703) als Teil der Grundfläche (520, 602) der Aussparung (305, 511), angeordnet an gegenüberliegenden Seitenflächen des Gepäckraumfachs aufweisen und die zweiten Führungsmittel die mindestens eine passende Nut (518, 603) als Teil der unteren Fläche (519, 604) des Endstücks aufweisen.

4. Gepäckraumabdeckungssystem gemäß einem der Ansprüche 1-3, **dadurch gekennzeichnet, dass** die ersten Führungsmittel den mindestens einen hervorstehenden Rücken (503, 601, 702, 703) als Teil der unteren Fläche (519, 604) des Endstücks aufweisen und die zweiten Führungsmittel die mindestens eine passende Nut (518, 603) als Teil der Bodenfläche (520, 602) der Aussparung (305, 511), angeordnet an gegenüberliegenden Seitenflächen des Gepäckraumfachs, aufweisen.

5. Gepäckraumabdeckungssystem gemäß einem der Ansprüche 1-4, **dadurch gekennzeichnet, dass** die Form des Rückens oder der Rücken (503, 601, 702, 703) und der korrespondierenden Nut oder Nuten (518, 603) V-förmig ist.

6. Gepäckraumabdeckungssystem gemäß einem der Ansprüche 1-5, **dadurch gekennzeichnet, dass** die Form des Rückens oder der Rücken (503, 601, 702, 703) und der korrespondierenden Nut oder Nuten (518, 603) W-förmig ist.

7. Gepäckraumabdeckungssystem gemäß einem der Ansprüche 1-6, **dadurch gekennzeichnet, dass** die untere Fläche des Endstücks (519, 604) oder die Bodenfläche (520, 602) der Aussparung (305, 511), angeordnet an gegenüberliegenden Seitenflächen des Gepäckraumfachs, zwei rechtwinklige Rücken (702, 703) aufweist.

8. Gepäckraumabdeckungssystem gemäß einem der Ansprüche 1-7, **dadurch gekennzeichnet, dass** ein Bodenteil (605) des Endstücks, aufweisend die Führungsmittel in Form des Rückens, der Rücken, der Nut oder Nuten, eine getrennte Komponente ist, bündig montiert mit dem Boden des Endstücks.

9. Gepäckraumabdeckungssystem gemäß Anspruch 8, **dadurch gekennzeichnet, dass** der Zusammenbau des Bodenteils des Endstücks mit dem Endstück durch Aufschnappmittel erreicht wird.

10. Gepäckraumabdeckungssystem gemäß einem der vorstehenden Ansprüche, **dadurch gekennzeichnet, dass** die unter Fläche des Endstücks (519, 604) aus synthetischem Gummi hergestellt ist und die Bodenfläche (520, 602) der Aussparung (305, 511), angeordnet an gegenüberliegenden Seitenflächen des Gepäckraumfachs, aus ABS Kunststoff hergestellt ist und eine Fläche mit einem eingravierten Strichmuster aufweist.

11. Gepäckraumabdeckungssystem gemäß einem der vorstehenden Ansprüche, **dadurch gekennzeichnet, dass** die Aussparung (305, 511) in einer Seitenverkleidung (203, 204, 303) hergestellt ist.

12. Gepäckraumabdeckungssystem gemäß einem der vorstehenden Ansprüche, **dadurch gekennzeichnet, dass** der mindestens eine Verriegelungsschlitten (403, 404, 504, 505) durch eine Feder (409), angebracht an den mechanischen Mitteln (404, 506), in eine ausgestreckte Verriegelungsposition gezwungen wird.

13. Ein Endstück zur Anwendung in einem Gepäckraumabdeckungssystem gemäß Anspruch 1.

## Revendications

1. Système de cache-bagages comprenant une paire de pièces d'extrémité (205, 206, 302, 401, 501), montées sur chaque extrémité d'une cassette (201, 301) contenant un cache-bagages (02), et des évidements correspondants (305, 511) agencés à des surfaces latérales opposées du compartiment à bagages d'un véhicule, dans lequel chaque pièce d'extrémité est configurée de manière à être montée dans un évidement correspondant, chaque pièce d'extrémité comprenant :
• au moins un curseur de verrouillage (402, 403, 504, 505) configuré de manière à verrouiller la pièce d'extrémité sur des surfaces latérales opposées du compartiment à bagages du véhicule ;
• des moyens mécaniques (404, 506) connectés audit au moins un curseur de verrouillage et configurés de manière à maintenir ledit au moins un curseur de verrouillage en position verrouillée;
• un arrangement (304, 410, 507) pour libérer ledit au moins un curseur de verrouillage de la position verrouillée ;
• dans lequel une surface inférieure (519, 604) de la pièce d'extrémité (205, 206, 302, 401, 501), et une surface inférieure (520, 602) de l'évidement (305, 511) sont pourvues de moyens de guidage coopérants pour positionner la pièce d'extrémité, dans lequel un premier moyen de guidage comprend au moins une nervure saillante (503, 601, 702, 703), et un deuxième moyen de guidage comprend au moins une rainure (518, 603) destinée à recevoir ladite nervure, lesdits moyens de guidage s'étendant sensiblement au moins soit dans le sens de la longueur, soit dans la direction latérale du véhicule, positionnant ainsi la pièce d'extrémité respectivement dans la direction latérale et le sens de la longueur ;
**caractérisé en ce que**:
• chaque pièce d'extrémité comprend un curseur de verrouillage avant (402, 504) et un curseur arrière (403, 505) ; et **en ce que**,
• lorsque la pièce d'extrémité (205, 206, 302, 401, 501) est poussée vers le bas dans l'évidement (511), les curseurs de verrouillage arrière (403, 505) et avant (402, 504) sont adaptés pour être agencés dans des trous (512, 513) desdites surfaces latérales opposées, et **en ce que** les surfaces supérieures (516, 517) des curseurs de verrouillage présentent un profil incliné pour positionner la pièce d'extrémité dans le sens de la hauteur du véhicule en pressant le premier moyen de guidage qui comprend ladite au moins une nervure saillante (503, 601, 702, 703) en direction du deuxième moyen de guidage qui comprend ladite au moins une rainure de réception (518, 603), de telle sorte que la pression vers le bas presse la nervure saillante (503, 601, 702, 703) dans la rainure ou les rainures correspondante(s), et renforce ainsi la stabilisation de la pièce d'extrémité dans le sens de la longueur (X) et/ou dans la direction latérale (Y) du véhicule tout en stabilisant et en positionnant en même temps la pièce d'extrémité dans le sens de la hauteur (Z) du véhicule.

2. Système de cache-bagages selon la revendication 1, **caractérisé en ce que** chaque pièce d'extrémité comprend un curseur de verrouillage latéral additionnel.

3. Système de cache-bagages selon l'une quelconque des revendications 1 ou 2, **caractérisé en ce que** le premier moyen de guidage qui comprend ladite au moins une nervure saillante (503, 601, 702, 703) fait partie de la surface inférieure (520, 602) de l'évidement (305, 511) qui est formé à des surfaces latérales opposées du compartiment à bagages, et le deuxième moyen de guidage qui comprend ladite au moins une rainure de réception (518, 603) fait partie de la surface inférieure (519, 604) de la pièce d'extrémité.

4. Système de cache-bagages selon l'une quelconque des revendications 1 à 3, **caractérisé en ce que** le premier moyen de guidage qui comprend ladite au moins un nervure saillante (503, 601, 702, 703) fait partie de la surface inférieure (519, 604) de la pièce d'extrémité, et le deuxième moyen de guidage qui comprend ladite au moins une nervure de réception (518, 603) fait partie de la surface inférieure (520, 602) de l'évidement (305, 511) qui est formé à des surfaces latérales opposées du compartiment à bagages.

5. Système de cache-bagages selon l'une quelconque des revendications 1 à 4, **caractérisé en ce que** la nervure ou les nervures (503, 601, 702, 703) et la rainure ou les rainures correspondante(s) (518, 603) présentent une configuration en forme de V.

6. Système de cache-bagages selon l'une quelconque des revendications 1 à 5, **caractérisé en ce que** la nervure ou les nervures (503, 601, 702, 703) et la rainure ou les rainures correspondante(s) (518, 603) présentent une configuration en forme de W.

7. Système de cache-bagages selon l'une quelconque des revendications 1 à 6, **caractérisé en ce que** la surface inférieure de la pièce d'extrémité (519, 604) ou la surface inférieure (520, 602) de l'évidement (305, 511) qui est formé à des surfaces latérales opposées du compartiment à bagages comporte deux nervures orthogonales (702, 703).

8. Système de cache-bagages selon l'une quelconque des revendications 1 à 7, **caractérisé en ce qu'**une partie inférieure (605) de la pièce d'extrémité qui comporte le moyen de guidage sous la forme d'une nervure, de plusieurs nervures, d'une rainure ou de plusieurs rainures est un composant séparé qui est monté à fleur du bas de la pièce d'extrémité.

9. Système de cache-bagages selon la revendication 8, **caractérisé en ce que** l'assemblage de la partie inférieure de la pièce d'extrémité à la pièce d'extrémité est accompli à l'aide d'un moyen d'encliquetage.

10. Système de cache-bagages selon l'une quelconque des revendications précédentes, **caractérisé en ce que** la surface inférieure de la pièce d'extrémité (519, 604) est constituée d'un caoutchouc synthétique, et la surface inférieure (520, 602) de l'évidement (305, 511) qui est formé à des surfaces latérales opposées du compartiment à bagages est constituée de plastique ABS et présente une surface qui comporte un motif à barres gravées.

11. Système de cache-bagages selon l'une quelconque des revendications précédentes, **caractérisé en ce que** l'évidement (305, 511) est formé dans une garniture latérale (203, 204, 303).

12. Système de cache-bagages selon l'une quelconque des revendications précédentes, **caractérisé en ce que** ledit au moins un curseur de verrouillage (403, 404, 504, 505) est poussé de force dans une position de verrouillage étendue par un ressort (409) qui est attaché aux moyens mécaniques (404, 506).

13. Pièce d'extrémité à utiliser dans un système de cache-bagages selon la revendication 1.
